# EUROPEAN PATENT SPECIFICATION

(11) **EP 0 720 932 B1**
(45) Date of publication and mention of the grant of the patent: **28.06.2000**
(21) Application number: 95119873.8
(22) Date of filing: 03.04.1992
(51) Int. Cl.: B60P 3/22, B60P 3/24

(54) **Road tanker**
Tankwagen
Camion citerne

(30) Priority: 04.04.1991 AU PK543491
(43) Date of publication of application: 10.07.1996
(62) Divisional of application: 92302970.6
(73) Proprietor: HOCKNEY PTY LIMITED, Smithfield New South Wales 2164 (AU)
(72) Inventor: Dingle, Trevor, Bilpin, New South Wales 2758 (AU)
(74) Representative: Webb, Andrew John

(56) References cited:
- GB-A- 946 046
- GB-A- 1 527 799
- US-A- 2 091 731
- US-A- 3 131 949

## Description

### FIELD OF THE INVENTION

This invention relates to tanks to be used in the transportation of liquids and more particularly but not exclusively to road tankers.

### BACKGROUND OF THE INVENTION

Road tankers may have their vessels formed of an elongated shell which encloses a chamber to receive the liquid to be transported. Extending transverse of the chamber and welded to the internal surfaces of the shell, are dividers and baffles.

The above discussed vessel is formed by providing an aluminium sheet to form the bottom of the shell and welding to that two side panels. Initially, the baffles and/or dividers are held in position in a generally vertical orientation, but inverted. The bottom panel and side panels are then placed over the dividers and/or baffles and deformed to conform to the external peripheral profile of the baffles and/or dividers. This is achieved by pulling the side panels downward over the dividers and/or baffles. As the shell material deforms, it is welded in position to retain its deformed configuration.

To the above vessel adjacent the location where the dividers and/or baffles are welded to the shell, there is welded to the external surface of the shell, various mountings for the wheel assemblies and other apparatus.

It should be appreciated that when the above described vessel is being formed, the vessel is formed inverted and must subsequently be righted for completion.

The above known construction of road tankers has the disadvantage that in an accident, the tank is vulnerable should the tanker over turn. More particularly, that should the road tanker over turn, it is not uncommon for the vessel to roll completely over and in some instances become inverted. In such instances, the vessel can rupture.

As examples of the above known construction of road tankers, attention is drawn to the following specifications.

British Patent 946046 discloses a road tanker, with the vessel substantially circular in transverse cross section. Should the tanker become involved in an accident, the vessel is vulnerable as its structure does not inhibit the vessel becoming almost entirely inverted, more particularly, the sides of the vessel are not reinforced.

USA Patent 3131949 discloses a road tanker, with the vessel substantially oval in transverse cross section. Again, the vessel is constructed not to inhibit complete rollover, with the sides not being reinforced.

British Patent Specification 1527799 which may be considered as being the closest prior art discloses a road tanker. The vessel although having reinforcing on the roof portion, does not have side reinforcing.

### OBJECT OF THE INVENTION

It is the object of the present invention to overcome or substantially ameliorate the above disadvantages.

### SUMMARY OF THE INVENTION

There is disclosed herein a tank to transport liquid, said tank comprising:
an elongated shell encompassing an elongated chamber to receive the liquid, the shell having a floor portion, two side wall portions, and a top portion;
a plurality of walls extending transversely of said chamber and secured to said shell, said walls being generally parallel and located at spaced locations along the chamber;
characterised in that said tank further includes:
a longitudinally extending reinforcement located at the upper portions of each side wall and extending laterally outward thereof.

### BRIEF DESCRIPTION OF THE DRAWINGS

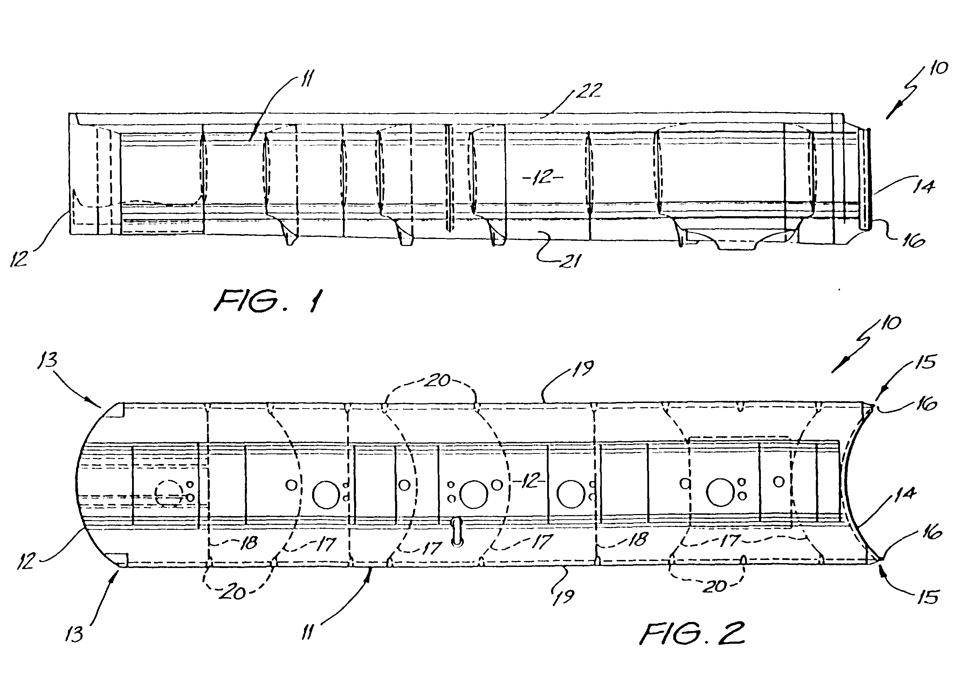

A preferred form of the present invention will now be described by way of example with reference to the accompanying drawings wherein
Figure 1 is a schematic side elevational of a tank for a road tanker;
Figure 2 is a schematic top plan view of the tank of Figure 1;
Figure 3 is a schematic front elevation of a divider wall employed in the tank of Figure 1;
Figure 4 is a schematic top plan view of the divider wall of Figure 3;
Figure 5 is a schematic plan view of the sheet to form the tank floor;
Figure 6 is a schematic sectioned front elevation of one side of the tank of Figure 1;

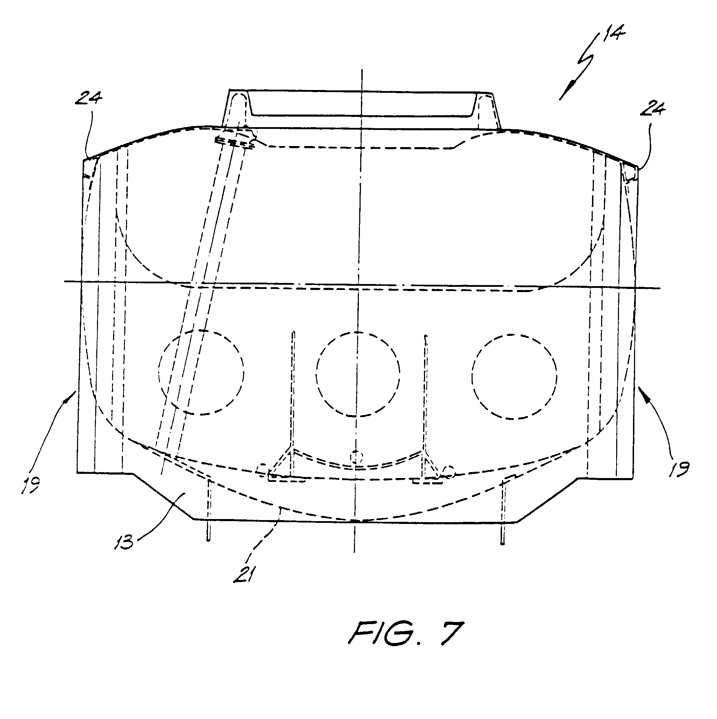

Figure 7 is a schematic rear elevation of the tank of Figure 1;

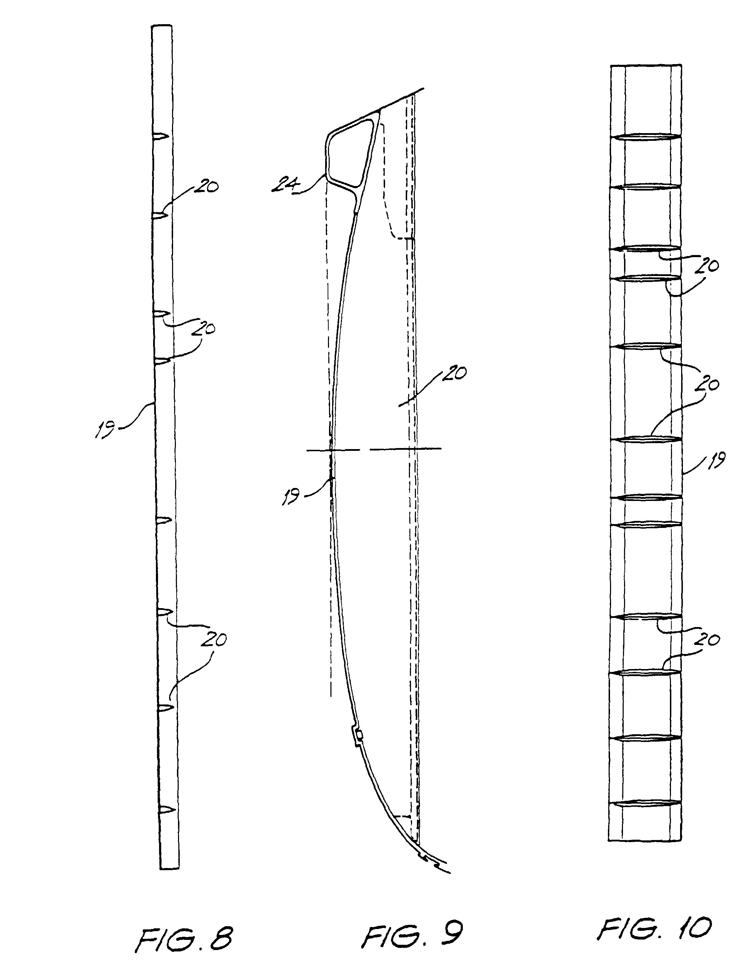

Figure 8 is a schematic sectioned side elevation of a side wall of the tank of Figure 1;
Figure 9 is a schematic end elevation of the side wall of Figure 8; and
Figure 10 is a schematic plan view of the side wall of Figure 8.

In the accompanying drawings there is schematically depicted a vessel 10 of a road tanker. The vessel 10 consists of a shell 11 encompassing a chamber 12 to receive a liquid to be transported.

The forward end of the vessel 10 is provided with a forward bulkhead 12 which is convex and which has adjacent its extremities a hollow section 13 which acts as a reinforcement in that area which aids in minimising damage to the vessel 10 should the forward corners of the shell 11 receive an impact. The rear bulkhead 14 is concave and extends at its extremities to hollow sections 15 which aid in reinforcing the rear extremities of the vessel 10 to aid it in resisting an impact in that area. The concave configuration of the bulkhead 14 also acts to minimise aerodynamic drag. Since the bulkhead 14 extends to vertically extending edges 16 it sheds vortices from these vertical edges 16.

Extending transversely across the chamber are dividers 17 and/or baffles 18. Each of these dividers 17 and baffles 18 is secured to a side panel 19 via mountings 20. Each mounting 20 is vertically extending and is of a generally "U-shaped" transverse cross section.

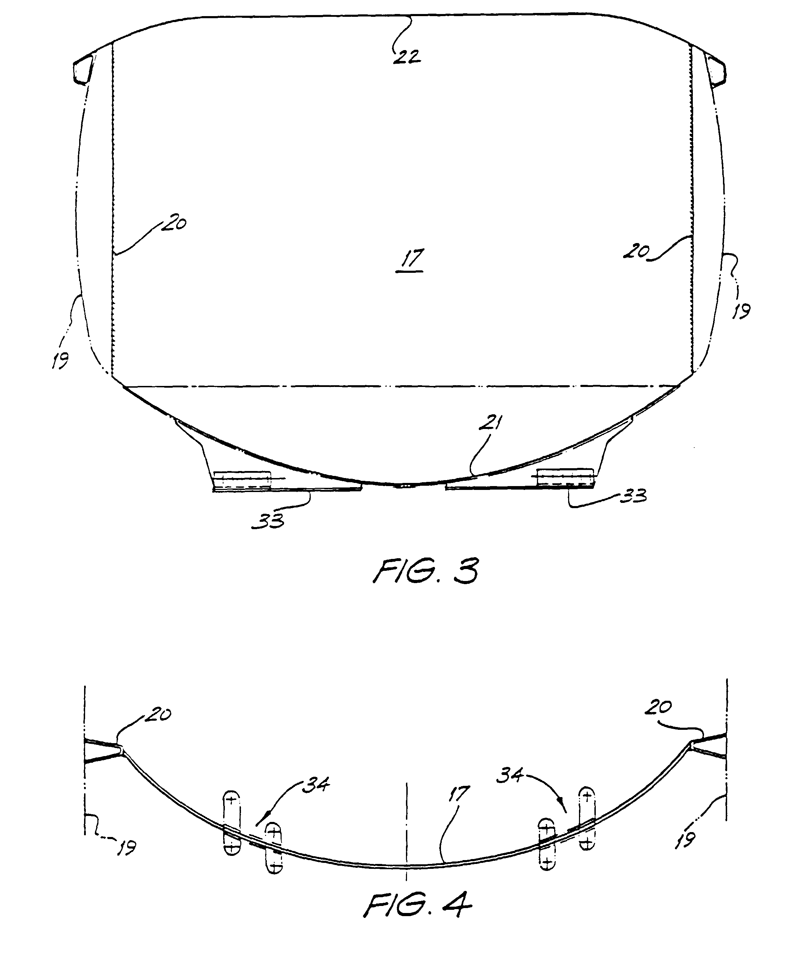

In Figures 3 and 4 there is schematically depicted one of the dividers 17.

The shell 11 consists of the side panels 19, a floor panel 21 and a roof panel 22.

Each side panel 19 consists of a sheet 23 joined at its upper end to a hollow section 24 which reinforces the upper edges of the tank 10 to again aid in strengthening the tank 10 against impact, particularly impact resulting from a rollover. The side panel 19 extends to an upper sheet 25 of the roof panel 22 which upper sheet 25 is also provided with a hollow section 26 again designed to aid in strengthening the tank 10 against an impact which may result from a rollover.

The sheet 23 is deformed adjacent its lower portions so as to follow the contour 27 at the forward end of the tank 10, and to follow the contour 28 adjacent the rear of the tank 10. The mean profile is illustrated by the contour 29. The contours 27, 28 and 29 are portions of a circle.

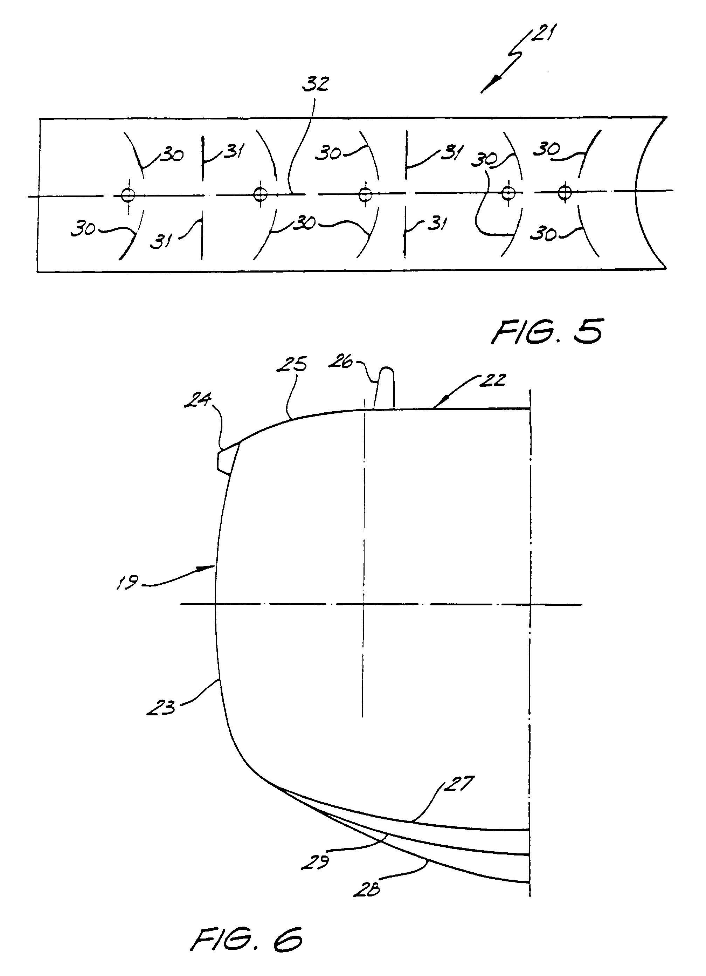

The floor panel 21 is formed from a flat sheet. The panel 21 is cut to provide transversely extending slots 30 which are generally arcuate. In Figure 5, the floor panel 21 is illustrated in its flat form prior to being deformed to its curved configuration in the formed vessel 10. The floor panel 21 is also provided with further slots 31 which also extend generally transverse of the longitudinal axis 32 of the floor panel 21. As best seen in Figure 21, the slots 30 and 31 are arranged in pairs extending transverse of the longitudinal axis 32.

Each of the side panels 19 is provided with a plurality of the mountings 20. Each of the dividers 17 and/or baffles 18 are welded to associated transversely aligned mountings 20.

Each of the dividers 17 and/or baffles 18 are provided with downwardly projecting pairs of flanges 33 which are intended to project through the pairs of slots 30 or 31. The flanges 33 provide mountings for wheel assemblies and other apparatus to be secured to the vessel 10. In Figures 3 and 4, the flanges 33 are illustrated as receiving adaptors 34 to adapt the flanges 34 to provide mountings for the wheel assemblies.

The above described tank is of an aluminium construction. In manufacturing the tank 10, the floor panel 21 is first welded to the pre-assembled side panels 19. Thereafter, the floor panel 21 is supported so as to assume its intended configuration. Thereafter, the dividers 17 and/or baffles 18 are placed in position so as to extend downwardly through their associated slots 30 or 31. The flanges 33 then project through the floor panel 21. While the dividers 17 and/or baffles 18 are held in position, the side panels 19 are pivotted upwardly to a position where the mountings 20 abut their associated divider 17 and/or baffle 18. While this process is taking place, the panels 19 and 21 are being welded in position. Thereafter, the roof panel 22 may be added or alternatively folded in position with the side panels 19. This operation may be conveniently performed by placing the unformed shell 11 in a sling.

It should be appreciated that the floor panel 21 is shaped to provide the tank 10 with an increasing transverse cross section toward the rear of the tank 10. This is achieved by having the floor panel 21, in its finishied profile, conforming generally to portions of three frusto-conical surfaces. The central portion of the floor panel 21 conforms basically to a frusto-conical surface which tapers rearwardly. The side portions of the panel 21 conform to frusto-conical surfaces which taper forwardly. By having the various portions of the floor 21 conform to various frusto-conical surfaces, the panel 21 can be deformed without buckling since it will bend about generally straight lines extending longitudinally of the panel 21.

## Claims

1. A tank (10) to transport liquid, said tank (10) comprising:
an elongated shell (11) encompassing an elongated chamber (12) to receive the liquid, said shell (11) having a floor portion (21), two side wall portions (19), and a top portion (22);
a plurality of walls (17, 18) extending transversely of said chamber and secured to said shell (11), said walls (17, 18) being generally parallel and located at spaced locations along said chamber;
characterised in that said tank (10) further includes:
a longitudinally extending reinforcement (24) located at the upper portions of each side wall (19) and extending laterally outward therefrom.

2. The tank (10) of claim 1, wherein said reinforcements (24) have therein major transverse direction of extension generally horizontal.

3. The tank (10) of claim 1 or 2, wherein the side wall portions (19) are convex so as to project transverse horizontally outward to horizontal extremities, and said reinforcements (24) terminate horizontally approximately vertically above said horizontal extremities.

4. The tank (10) of claim 1, 2 or 3, wherein each reinforcement (24) is a longitudinally extending hollow extrusion.

5. The tank (10) of any one of claims 1 to 4, wherein each reinforcement 24 is located adjacent a respective join of the adjacent side wall portion (19) and top portion (22).

6. The tank (10) of any one of claims 1 to 5 wherein said tank (10) is constructed of aluminium and said reinforcements (24) are hollow aluminium sections connected to said side wall portions (19) and said top portion (22) so as to be located therebetween.

## Patentansprüche

1. Ein Tank (10) zum Transportieren von Flüssigkeit, wobei besagter Tank (10) umfaßt:
eine längliche Schale (11), die zur Aufnahme der Flüssigkeit eine längliche Kammer (12) umgibt, wobei besagte Schale (11) einen Bodenbereich (21), zwei Seitenwandbereiche (19) und einen Oberseitenbereich (22) aufweist;
mehrere Wände (17, 18), die sich transversal von besagter Kammer erstrecken und an besagter Schale (11) gesichert sind, wobei besagte Wände (17, 18) im allgemeinen parallel sind und sich an im Abstand angeordneten Orten entlang besagter Kammer befinden;
dadurch gekennzeichnet, daß besagter Tank (10) außerdem einschließt:
eine sich in Längsrichtung erstreckende Verstärkung (24), die sich an den oberen Bereichen jeder Seitenwand (19) befindet und sich davon seitlich nach außen erstreckt.

2. Der Tank (10) von Anspruch 1, worin besagte Verstärkungen (24) eine im allgemeinen horizontale Hauptquererstreckungsrichtung aufweisen.

3. Der Tank (10) von Anspruch 1 oder 2, worin die Seitenwandbereiche (19) konvex sind, um quer horizontal nach außen zu horizontalen äußersten Enden vorzuragen, und besagte Verstärkungen (24) horizontal näherungsweise vertikal über besagten horizontal äußersten Ende enden.

4. Der Tank (10) von Anspruch 1, 2 oder 3, worin jede Verstärkung (24) eine sich in Längsrichtung erstreckende hohle Extrusion ist.

5. Der Tank (10) von irgendeinem der Ansprüche 1 bis 4, worin jede Verstärkung (24) sich benachbart zu einer jeweiligen Verbindung des benachbarten Seitenwandbereiches (19) und Oberseitenbereiches (22) befindet.

6. Der Tank (10) von irgendeinem der Ansprüche 1 bis 5, worin besagter Tank (10) aus Aluminium konstruiert ist und besagte Verstärkungen (24) hohle Aluminiumabschnitte sind, die mit besagten Seitenwandbereichen (19) und besagtem Oberseitenbereich (22) verbunden sind, um dazwischen angeordnet zu sein.

## Revendications

1. Cuve (10) de transport d'un liquide, la cuve (10) comprenant :
une enveloppe allongée (11) entourant une chambre allongée (12) destinée à loger le liquide, l'enveloppe (11) ayant une partie de plancher (21), deux parties de paroi latérale (19) et une partie supérieure (22),
plusieurs parois (17, 18) s'étendant transversalement à la chambre et étant fixées à l'enveloppe (11), les parois (17, 18) étant parallèles de façon générale et placées à distance le long de la chambre,
caractérisée en ce que la cuve (10) comporte en outre :
une armature longitudinale (24) placée dans les parties supérieures de chaque paroi latérale (19) et s'étendant latéralement vers l'extérieur à partir de celle-ci.

2. Cuve (10) selon la revendication 1, dans laquelle les armatures (24) ont à l'intérieur une direction transversale principale d'allongement horizontal de façon générale.

3. Cuve (10) selon la revendication 1 ou 2, dans laquelle les parties de paroi latérale (19) sont convexes afin qu'elles dépassent transversalement horizontalement et à l'extérieur vers des extrémités horizontales, et les armatures (24) se terminent horizontalement approximativement verticalement au-dessus des extrémités horizontales.

4. Cuve (10) selon la revendication 1, 2 ou 3, dans laquelle chaque armature (24) est un profilé creux longitudinal.

5. Cuve (10) selon l'une quelconque des revendications 1 à 4, dans laquelle chaque armature (24) est adjacente à un raccord respectif de la partie adjacente de paroi latérale (19) et de la partie supérieure (22).

6. Cuve (10) selon l'une quelconque des revendications 1 à 5, dans laquelle la cuve (10) est formée d'aluminium, et les armatures (24) sont des tronçons creux d'aluminium raccordés aux parties de paroi latérale (19) et à la partie supérieure (22) afin qu'ils se trouvent entre elles.
